# EUROPÄISCHE PATENTSCHRIFT

(11) **EP 3 553 142 B1**
(45) Veröffentlichungstag und Bekanntmachung des Hinweises auf die Patenterteilung: **06.01.2021**
(21) Anmeldenummer: 18167313.8
(22) Anmeldetag: 13.04.2018
(51) Int. Cl.: C09D 183/08, C09D 183/14, H01B 3/46

(54) **VERFAHREN ZUR HERSTELLUNG EINES BESCHICHTUNGSMATERIALS, INSBESONDERE FÜR DIE BESCHICHTUNG VON DRÄHTEN, SOWIE EIN ENTSPRECHENDES BESCHICHTUNGSVERFAHREN**
METHOD FOR PRODUCING A COATING MATERIAL, PARTICULARLY FOR THE COATING OF WIRES, AND A CORRESPONDING COATING PROCESS
PROCÉDÉ DE FABRICATION D'UN MATÉRIAU DE REVÊTEMENT, EN PARTICULIER POUR LE REVÊTEMENT DES FILS AINSI QUE PROCÉDÉ DE REVÊTEMENT CORRESPONDANT

(43) Veröffentlichungstag der Anmeldung: 16.10.2019
(73) Patentinhaber: Isodra-Biotec OHG, 58566 Kierspe (DE)
(72) Erfinder: Seewald, Oliver, 34431 Marsberg (DE); Bremser, Wolfgang, 33102 Paderborn (DE); Süreth, Hans-Werner, 58566 Kierspe (DE); Süreth, Maria, 58566 Kierspe (DE)
(74) Vertreter: Angerhausen, Christoph

(56) Entgegenhaltungen:
- DE-A1-102011 001 833

## Beschreibung

Die Erfindung betrifft ein Verfahren zur Herstellung eines Beschichtungsmaterials, insbesondere für die Beschichtung von Drähten. Derartige Drähte finden Anwendung in mikroelektronische Bauteilen, Motoren, Statoren, Isolatoren, elektrischen Leitern, Kondensatoren, Spulen, Leiterbahnen, induktiven Bauelementen, Transformatoren, Transistoren, Generatoren, in der Akustik, der Medizintechnik, der Automobiltechnik, der Haushaltstechnik, der Luft- und Raumfahrttechnik und der Unterhaltungstechnik. Gattungsgemäße Drähte können auch als sogenannte Feinstdrähte für die oben genannten Anwendungen ausgebildet sein.

Die DE 10 2011 001833 A1 beschreibt ein Verfahren zur Herstellung einer Feinstdrahtbeschichtung, umfassend die Schritte:
(a) Vorlegen einer geeigneten Carboxylverbindung, bevorzugt eines Bisanhydrids;
(b) Zugeben von Bis(alkoxyalkylsilylalkyl)amin zur Herstellung von Bis(alkoxyalkylsilylalkyl)imiden/Bis(alkoxyalkylsilylalkyl)amiden;
(c) Polymerisieren der Bis(alkoxyalkylsilylalkyl)imiden/ Bis(alkoxyalkylsilylalkyl)amide;
(d) optional Hinzufügen von Tetraalkoxysilan/Trialkoxyalkylsilan/ Dialkoxyalkylsilan und nachfolgende Hydrolyse;
(e) Aufbringen des Polymerisats auf Feinstdraht.

Es wird dargelegt, dass in dem Schritt (a) bevorzugt Bisanhydride wie z. B. Pyromellithsäureanhydrid verwendet werden, um Nebenprodukte zu vermeiden. Dabei werden vorzugsweise der Schritt (a) und/oder der Schritt (b) in Alkohol oder einem Wasser-Alkohol-Gemisch durchgeführt, wobei zur Vermeidung von Nebenreaktionen der Wasseranteil bei max. 20 Vol-% liegen soll. Weiterhin wird bevorzugt der Schritt (c) in Wasser, Alkohol oder einem Wasser-Alkohol-Gemisch durchgeführt. Gemäß einer bevorzugten Ausführungsform soll der Schritt (d) so durchgeführt werden, dass zunächst die Tetraalkoxysilane/Trialkoxyalkylsilane/Dialkoxyalkylsilane vorgelegt werden und anschließend eine Hydrolyse so erfolgt, dass Wasser in einer so großen molaren Menge bezogen auf den Anteil an Ethoxygruppen in den Tetraalkoxysilanen/Trialkoxyalkylsilanen/Dialkoxyalkylsilanen hinzugegen wird, dass sich eine Hydrolyse einstellt.

Es hat sich herausgestellt, dass die aus dem Stand der Technik bekannten Beschichtungsmaterialien eine nur sehr eingeschränkte Lagerstabilität aufweisen und bereits nach wenigen Stunden aushärten und damit nicht mehr applizierbar sind, insbesondere nicht auf mikroelektronischen Strukturen wie Drähten.

Es ist daher die Aufgabe der Erfindung ein Verfahren der eingangs beschriebenen Art derart weiterzuentwickeln, dass es eine hohe Lagerstabilität und Applizierfähigkeit aufweist.

Die Aufgabe der Erfindung wir durch ein Verfahren mit den Merkmalen des Anspruchs 1 gelöst. Der nebengeordnete Anspruch 13 beschreibt ein entsprechendes Beschichtungsverfahren. Die abhängigen Ansprüche betreffen jeweils vorteilhafte Ausführungsformen der Erfindung.

Demgemäß weist das Verfahren die Schritte auf:
(a) Vorlegen einer Carboxylverbindung, vorzugsweise eines Bisanhydrids; und
(b) Zugeben mindestens eines (Alkoxyalkylsilyl)alkylamins zur Herstellung einer Präpolymerlösung aus Bis(alkoxyalkylsilylalkyl)imiden/Bis(alkoxyalkylsilylalkyl)amiden. Das vorgeschlagene Verfahren ist dadurch gekennzeichnet, dass in dem Schritt (a) die Carboxylverbindung unter Ausschluss von Wasser als Suspension in Alkohol mit einem Restwasseranteil von maximal 1 Vol-% und vorzugsweise in Ethanol mit einem Restwasseranteil von maximal 1 Vol-% vorgelegt wird, sodass eine Polymerisation der Präpolymerlösung unterdrückt wird, wobei die erzeugte Präpolymerlösung unter einer Schutzgasatmosphäre, vorzugsweise unter Stickstoff, abgefüllt wird.

Es hat sich herausgestellt, dass wenn die Carboxylverbindung als eine Suspension in absolutem Alkohols vorgelegt wird und damit eine Polymerisation der Präpolymerlösung unterdrückt wird, die Präpolymerlösung nicht nur eine hohe Lagerstabilität aufweist. Vielmehr bedingt die spontan bei der Applikation der Präpolymerlösung an der Luftatmosphäre eintretende teilweise Polymerisation der Präpolymerlösung dazu, dass die Präpolymerlösung sehr gut applizierfähig ist. Für die vollständige Polymerisation des in der applizierten Lösung enthaltenen Präpolymers kann das mit der Lösung beschichtete Substrat, beispielsweise ein Draht, in einem Ofen thermisch behandelt werden. Im Gegensatz dazu ist bei den aus dem Stand der Technik bekannten Beschichtungsmaterialien immer vorgesehen, dass diese bereits polymerisiert sind, wenn sie auf das Substrat aufgebracht werden, mithin vor dem Aufbringen auf das Substrat polymerisiert wurden. Gemäß dem Prinzip der Erfindung wird somit kein Polymerisat auf das Substrat, insbesondere den Draht aufgebracht, sondern beispielsweise eine Lösung eines Bis(alkoxyalkylsilylalkyl)amids / Bis(alkoxyalkylsilylalkyl)imids als Präpolymer.

Es hat sich weiterhin herausgestellt, dass die in handelsüblichem "reinem" Alkohol enthaltenen Restwassermengen von bis zu 5 Vol-% hinreichend sind, um die Polymerisation der Präpolymerlösung innerhalb kürzester Zeit (weniger als 24 Stunden) soweit fortschreiten zu lassen, dass die Präpolymerlösung soweit aushärtet, dass sie zumindest für die genannten Anwendungen nicht mehr applizierfähig ist. Ein "absoluter Alkohol" im Sinne der Erfindung enthält daher einen Restwasseranteil von maximal 1 Vol-%, vorzugsweise von kleiner als 0,1 Vol-%.

Das Beschichtungsmaterial ist grundsätzlich nicht nur für die Beschichtung von Drähten geeignet, sondern auch für die Beschichtung beliebiger anderer Substrate. Weiterhin eignet es sich für die Herstellung eines entsprechenden Kunststoffmaterials.

Es kann vorgesehen sein, dass das gesamte Herstellungsverfahren in einer Schutzgasatmosphäre durchgeführt wird. Dadurch kann der Eintrag von Wasser aus der Luftatmosphäre in die Präpolymerlösung bei dessen Herstellung weiter verringert werden. Beispielsweise kann das gesamte Herstellungsverfahren in einer Stickstoffatmosphäre durchgeführt werden. So kann das Verfahren etwa in einer Reaktionsapparatur durchgeführt werden, durch die ein Schutzgas, vorzugsweise Stickstoff, hindurch geleitet wird.

In dem Schritt (b) kann mindestens eines von 3-Aminopropyltriethoxysilan und 3-Aminopropylmethyldiethoxysilan und vorzugsweise ein Gemisch beider zugegeben werden. Bei einem Gemisch können die Anteile von 3-Aminopropyltriethoxysilan und 3-Aminopropylmethyldiethoxysilan ein Verhältnis von 1:1 aufweisen. Vorzugsweise beträgt das Verhältnis von 3-Aminopropylmethyldiethoxysilan zu 3-Aminopropyltriethoxysilan zwischen 1:1 und 3:1.

In dem Schritt (a) kann Pyromellithsäureanhydrid in absolutem Ethanol vorgelegt werden, welches sich als für die Herstellung der lagerstabilen Präpolymerlösung besonders vorteilhaft herausgestellt hat. Dabei kann der Massenanteil des Ethanols in der resultierenden Lösung aus (b) zwischen 60% und 90% und vorzugsweise zwischen 75% und 85% betragen.

In dem Schritt (b) kann ein Gemisch aus 3-Aminopropyltriethoxysilan und 3-Aminopropylmethyldiethoxysilan zugegeben werden.

In dem Schritt (b) kann das Zugeben das Zutropfen über einen Zeitraum von 30 Minuten bis 3 Stunden und vorzugsweise über einen Zeitraum von 1 Stunde bis 1,5 Stunden aufweisen.

Der Schritt (b) kann das Durchmischen der Präpolymerlösung für 0,5 bis 23 Stunden und vorzugsweise für 4 bis 6 Stunden aufweisen, nachdem das das (Alkoxyalkylsilyl)alkylamin vollständig zugegeben worden ist. Es ist zweckmäßig das Durchmischen bereits während des Zugebens zu beginnen.

Gemäß einem anderen Aspekt der Erfindung wird ein Beschichtungsverfahren unter Verwendung eines Beschichtungsmaterials, das auf die zuvor beschriebene Art hergestellt worden ist, bei dem die erhaltene im Wesentlichen unpolymerisierte Präpolymerlösung auf ein Substrat, insbesondere auf einen Draht, appliziert und einer Luftatmosphäre ausgesetzt wird. Demgemäß tritt die Polymerisation somit erst durch den Kontakt mit der Luftatmosphäre ein. Dabei kann die der Luftatmosphäre ausgesetzte und applizierte im Wesentlichen unpolymerisierte Präpolymerlösung durch Hydrolyse polymerisiert werden, wobei das für die Hydrolyse erforderliche Wasser über die Luftatmosphäre bereitgestellt wird.

Das Polymerisieren kann weiterhin das Einbrennen des Präpolymerisats in das Substrat aufweisen, was insbesondere auch zur Beschleunigung der Polymerisierung angewendet werden kann.

**Ausführungsbeispiel: Beschichtungsmaterial für die Beschichtung von Drähten und Drähten, für verschiedene Massenprozentanteile des Präpolymers: 15%, 20%, 25%**

| | M (g/ mol) | n (mol) | Masse (g) | Masse (g) | Masse (g) |
|---|---|---|---|---|---|
| Pyromellithsäureanhydrid | 218,12 | 0,04025 | 8,78 | 8,78 | 8,778 |
| 3-Aminopropyltriethoxysilan | 221,42 | 0,0342 | 7,57 | 7,57 | 7,57 |
| 3-Aminopropylmethyldiethoxysilan | 191,4 | 0,0453 | 8,67 | 8,67 | 8,67 |
| | | | | | |
| Summe: | | | 25,02 | 25,02 | 25,02 |
| | | | | | |
| Ethanol | | | 75 | 141,67 | 100 |
| | | | | | |
| Gesamtmenge: | | | 100,02 | 166,69 | 125,02 |
| | | | | | |
| Massen-% des Bisimid-/ Bisamidanteils (theoretisch) : | | | 25,017 | 15,012 | 20,04 |

In einem ausgeheizten und unter Stickstoffstrom ausgekühlten 250 ml Dreihalskolben wird Pyromellithsäureanhydrid in Ethanol (100%, wasserfrei) als Suspension vorgelegt. Die Mischung von 3-Aminopropyltriethoxysilan und 3-Aminopropylmethyldiethoxysilan wird innerhalb einer Stunde zugetropft. Je höher der prozentuale Massenanteil ist, desto wärmer wird die Lösung, so dass während des Zutropfens mit einem Eisbad gekühlt wird. Anschließend wird 23 Stunden bei Zimmertemperatur gerührt. Während der gesamten Reaktionsdauer strömt ein Stickstoffstrom durch die Reaktionsapparatur. Abschließend wird abgefüllt und unter Stickstoff gelagert. Die Lösung ist lagerstabil und kann beispielsweise auf Kupferdraht appliziert werden.

## Patentansprüche

1. Verfahren zur Herstellung eines Beschichtungsmaterials, insbesondere für die Beschichtung von Drähten, das die Schritte aufweist:
(a) Vorlegen einer Carboxylverbindung, vorzugsweise eines Bisanhydrids; und
(b) Zugeben von mindestens einem (Alkoxyalkylsilyl)alkylamins zur Herstellung einer Präpolymerlösung aus Bis(alkoxyalkylsilylalkyl)imiden/ Bis(alkoxyalkylsilylalkyl)amiden;
**dadurch gekennzeichnet, dass** in dem Schritt (a) die Carboxylverbindung unter Ausschluss von Wasser als Suspension in Alkohol mit einem Restwasseranteil von maximal 1 Vol-% und vorzugsweise in Ethanol mit einem Restwasseranteil von maximal 1 Vol-% vorgelegt wird, sodass eine Polymerisation der Präpolymerlösung unterdrückt wird, wobei das gesamte Herstellungsverfahren in einer Schutzgasatmosphäre durchgeführt wird und wobei die erzeugte Präpolymerlösung unter einer Schutzgasatmosphäre, vorzugsweise unter Stickstoff, abgefüllt wird.

2. Verfahren nach Anspruch 1, bei dem das gesamte Herstellungsverfahren in einer Stickstoffatmosphäre durchgeführt wird.

3. Verfahren nach einem der vorangegangenen Ansprüche, das in einer Reaktionsapparatur durchgeführt wird, durch die ein Schutzgas, vorzugsweise Stickstoff, hindurch geleitet wird.

4. Verfahren nach einem der vorangegangen Ansprüche, bei dem in dem Schritt (b) mindestens eines von 3-Aminopropyltriethoxysilan und 3-Aminopropylmethyldiethoxysilan und vorzugsweise ein Gemisch beider zugegeben wird.

5. Verfahren nach einem der vorangegangen Ansprüche, bei dem in dem Schritt (a) Pyromellithsäureanhydrid in Ethanol mit einem Restwasseranteil von maximal 1 Vol-% vorgelegt wird.

6. Verfahren nach einem der vorangegangen Ansprüche, bei dem in dem Schritt (a) Pyromellithsäureanhydrid in Ethanol mit einem Restwasseranteil von maximal 1 Vol-% vorgelegt, wobei der Massenanteil des Ethanols in der resultierenden Lösung aus (b) zwischen 60% und 90% und vorzugsweise zwischen 75% und 85% beträgt.

7. Verfahren nach einem der vorangegangen Ansprüche, bei dem in dem Schritt (b) ein Gemisch aus 3-Aminopropyltriethoxysilan und 3-Aminopropylmethyldiethoxysilan zugegeben wird.

8. Verfahren nach einem der vorangegangen Ansprüche, bei dem in dem Schritt (b) das Zugeben das Zutropfen über einen Zeitraum von 30 Minuten bis 3 Stunden und vorzugsweise innerhalb von 1 bis 1,5 Stunden aufweist.

9. Verfahren nach einem der vorangegangen Ansprüche, bei dem der Schritt (b) das Durchmischen der Präpolymerlösung für 0,5 bis 23 Stunden und vorzugsweise für 4 bis 6 Stunden aufweist, nachdem das (Alkoxyalkylsilyl)alkylamin vollständig zugegeben worden ist.

10. Beschichtungsverfahren unter Verwendung eines Beschichtungsmaterials, das nach einem der vorangegangen Ansprüche hergestellt worden ist, bei dem die im Wesentlichen unpolymerisierte Präpolymerlösung auf ein Substrat, insbesondere auf einen Draht, appliziert und einer Luftatmosphäre ausgesetzt wird.

11. Beschichtungsverfahren nach Anspruch 10, bei dem die der Luftatmosphäre ausgesetzte und applizierte Präpolymerlösung durch Hydrolyse polymerisiert wird, wobei das für die Hydrolyse erforderliche Wasser über die Luftatmosphäre bereitgestellt wird.

12. Beschichtungsverfahren nach Anspruch 10 oder 11, bei dem das Polymerisieren das Einbrennen des Präpolymerisats in das Substrat aufweist.

13. Beschichtungsverfahren nach einem der Ansprüche 10 bis 13, bei dem der Draht ein Kupferdraht ist.

## Claims

1. A method for manufacturing a coating material, in particular for coating wires, comprising the steps of:
(a) providing a carboxylic compound, preferably a bisanhydride; and
(b) adding at least one (alkoxyalkylsilyl)alkylamine to prepare a prepolymer solution of bis(alkoxyalkylsilylalkyl)imides/ bis(alkoxyalkylsilylalkyl)amides;
**characterized in that** in step (a) the carboxyl compound is introduced as a suspension in alcohol with a residual water content of at most 1% by volume, preferably in ethanol with a residual water content of at most 1% by volume, with the exclusion of water, so that polymerization of the prepolymer solution is suppressed, wherein the entire manufacturing process is carried out in a protective gas atmosphere and wherein the prepolymer solution produced is filled under a protective gas atmosphere, preferably under nitrogen.

2. The method according to claim 1, wherein the entire manufacturing process is carried out in a nitrogen atmosphere.

3. The method according to one of the preceding claims, which is carried out in a reaction apparatus through which a protective gas, preferably nitrogen, is passed.

4. The method according to one of the preceding claims, in which in step (b) at least one of 3-aminopropyltriethoxysilane and 3-aminopropylmethyldiethoxysilane, and preferably a mixture of both, is added.

5. The method according to one of the preceding claims, in which in step (a) pyromellitic anhydride is added in ethanol with a residual water content of at most 1% by volume.

6. The method according to one of the preceding claims, in which in step (a) pyromellitic anhydride is added to ethanol with a residual water content of at most 1% by volume, the mass fraction of ethanol in the resulting solution from (b) being between 60% and 90% and preferably between 75% and 85%.

7. The method according to one of the preceding claims, in which in step (b) a mixture of 3-aminopropyltriethoxysilane and 3-aminopropylmethyldiethoxysilane is added.

8. The method according to one of the preceding claims, wherein in step (b) the addition comprises the dropwise adding over a period of 30 minutes to 3 hours and preferably over 1 to 1.5 hours.

9. The method according to any of the preceding claims, in which step (b) comprises mixing the prepolymer solution for 0.5 to 23 hours and preferably for 4 to 6 hours after the (alkoxyalkylsilyl)alkylamine has been completely added.

10. A coating method using a coating material prepared according to any of the foregoing claims, wherein the substantially unpolymerized prepolymer solution is applied to a substrate, in particular to a wire, and exposed to an air atmosphere.

11. The coating method according to claim 10, in which the prepolymer solution exposed and applied to the air atmosphere is polymerized by hydrolysis, wherein the water required for the hydrolysis is provided via the air atmosphere.

12. The coating method according to claim 10 or 11, in which the polymerization comprises baking the prepolymer into the substrate.

13. The coating method according to any one of claims 10 to 13, in which the wire is a copper wire.

## Revendications

1. Procédé de fabrication d'un matériau de revêtement, en particulier pour le revêtement de fils métalliques, qui présente les étapes suivantes :
(a) mise en place d'un composé carboxyle, de préférence d'un bisanhydride ; et
(b) addition d'au moins une (alcoxyalkylsilyl)alkylamine pour préparer une solution d'un prépolymère de bis(alcoxyalkylsilylalkyl)imides/bis(alcoxyalkyl-silylalkyl)amides ;
**caractérisé en ce que**, dans l'étape (a), le composé carboxyle est fourni en l'absence d'eau, sous forme d'une suspension dans un alcool avec une proportion d'eau résiduelle au maximum de 1 % en volume et de préférence dans de l'éthanol avec une proportion d'eau résiduelle au maximum de 1 % en volume, de façon à supprimer une polymérisation de la solution de prépolymère, la totalité du procédé de fabrication étant mise en œuvre sous une atmosphère d'un gaz inerte, et la solution de prépolymère produite étant transvasée sous une atmosphère d'un gaz inerte, de préférence sous azote.

2. Procédé selon la revendication 1, dans lequel la totalité du procédé de fabrication est mise en œuvre sous une atmosphère d'azote.

3. Procédé selon l'une des revendications précédentes, qui est mis en œuvre dans un appareil de réaction à travers lequel est envoyé un gaz de protection, de préférence de l'azote.

4. Procédé selon l'une des revendications précédentes, dans lequel, dans l'étape (b), on ajoute au moins l'un du 3-aminopropyltriéthoxysilane et du 3-aminopropylméthyldiéthoxysilane et de préférence un mélange des deux.

5. Procédé selon l'une des revendications précédentes, dans lequel, dans l'étape (a), on met en place de l'anhydride pyromellitique dans de l'éthanol avec une proportion d'eau résiduelle au maximum de 1 % en volume.

6. Procédé selon l'une des revendications précédentes, **caractérisé en ce que**, dans l'étape (a), on met en place de l'anhydride pyromellitique dans de l'éthanol avec une proportion d'eau résiduelle au maximum de 1 % en volume, la proportion en masse de l'éthanol dans la solution obtenue après (b) étant comprise entre 60 % et 90 % et de préférence entre 75 % et 85 %.

7. Procédé selon l'une des revendications précédentes, dans lequel, dans l'étape (b), on ajoute un mélange de 3-aminopropyltriéthoxysilane et de 3-aminopropylméthyldiéthoxysilane.

8. Procédé selon l'une des revendications précédentes, dans lequel, dans l'étape (b), l'addition comporte une addition goutte à goutte sur une durée de 30 minutes à 3 heures et de préférence entre 1 à 1,5 heures.

9. Procédé selon l'une des revendications précédentes, dans lequel, dans l'étape (b), le mélange de la solution de prépolymère a lieu pendant 0,5 à 23 heures et de préférence pendant 4 à 6 heures après que l'on a ajouté complètement l'(alcoxyalkylsilyl)alkylamine.

10. Procédé de revêtement par utilisation d'un matériau de revêtement qui a été fabriqué selon l'une des revendications précédentes, dans lequel la solution de prépolymère, pour l'essentiel non polymérisée, est appliquée sur un substrat, en particulier un fil métallique, et est soumise à une atmosphère d'air.

11. Procédé de revêtement selon la revendication 10, dans lequel la solution de prépolymère exposée à l'atmosphère d'air et appliquée est polymérisée par hydrolyse, l'eau nécessaire à l'hydrolyse étant mise à disposition par l'intermédiaire de l'atmosphère d'air.

12. Procédé de revêtement selon la revendication 10 ou 11, dans lequel la polymérisation comprend la cuisson du prépolymère dans le substrat.

13. Procédé de revêtement selon l'une des revendications 10 à 13, dans lequel le fil métallique est un fil de cuivre.
